# FASCICULE DE BREVET EUROPEEN

(11) **EP 1 099 990 B1**
(45) Date de publication et mention de la délivrance du brevet: **04.03.2009**
(21) Numéro de dépôt: 99122597.0
(22) Date de dépôt: 12.11.1999
(51) Int. Cl.: G04C 10/00, H02K 21/12

(54) **Génératrice pour pièce d'horlogerie**
Generator für Zeitmessgerät
Generator for timepiece

(43) Date de publication de la demande: 16.05.2001
(73) Titulaire: ASULAB S.A., CH-2501 Bienne (CH)
(72) Inventeur: Born, Jean-Jacques, 1110 Morges (CH)
(74) Mandataire: Ravenel, Thierry Gérard Louis

(56) Documents cités:
- EP-A- 0 751 445
- DE-U- 1 811 389

## Description

La présente invention se rapporte à un mouvement horloger équipé d'une génératrice en particulier pour montre-bracelet.

L'utilisation de batteries ou d'accumulateurs est pour toutes les applications, et en particulier pour une montre, un facteur limitant des caractéristiques de l'appareil. En effet, le changement ou la recharge de ces batteries ou accumulateurs affecte la disponibilité et la fiabilité de la montre.

Dans ce contexte, la montre mécanique traditionnelle possède un avantage certain dans la technique horlogère : une telle montre est disponible en permanence. La recharge en énergie - celle-ci étant purement mécanique - se fait simplement par remontage du mécanisme de la montre.

Ce type de montre utilise un dispositif de remontage manuel ou automatique couplé généralement à un dispositif de régulation nommé dans l'usage « échappement à ancre suisse ». Ce dispositif de régulation permet difficilement d'obtenir une grande précision. Ce système est en outre relativement coûteux.

L'autre grande famille concerne la montre à quartz classique. Une batterie alimente simultanément un moteur électrique et un dispositif de régulation de la marche de ce moteur. La rotation du moteur est pilotée par une fréquence nominale fournie par un quartz. Ceci permet d'avoir une bonne précision pour l'indication de l'heure. Toutefois, ce dispositif est relativement bruyant car l'avance de la roue des secondes est saccadée et la batterie doit être changée périodiquement.

De nouveaux types de montres ont été réalisés de façon à coupler les deux systèmes précités et exploiter leurs avantages respectifs. Dans ces réalisations, on a associé un stockage mécanique de l'énergie à une régulation par quartz, alimentée en énergie électrique par une génératrice entraînée par une partie mécanique couplée à un ressort de stockage de l'énergie.

Comme état de la technique correspondant peut être cité notamment l'article de MM Born, Dinger et Farine, « Salto- Un mouvement mécanique à remontage automatique ayant la précision d'un mouvement à quartz » paru dans la publication de la Société Suisse de Chronométrie « SSC journées d'étude 1997 », pages 55 à 63.

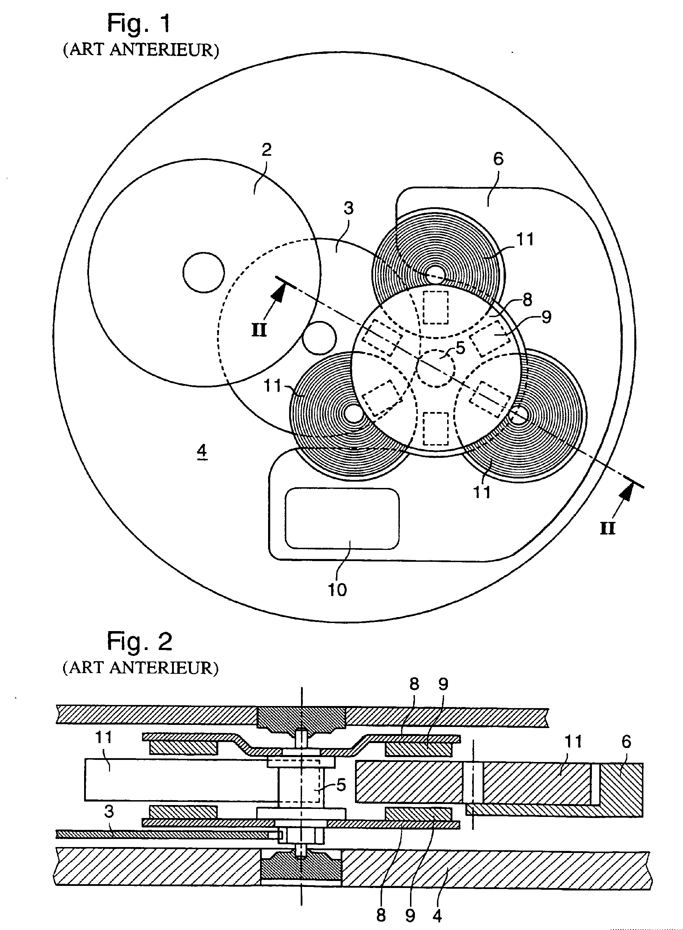

L'agencement de la génératrice selon cet art antérieur est illustré dans la figure 1 jointe, montrant une vue de dessus d'un mouvement horloger partiellement monté, et dans la figure 2 jointe, qui est une coupe transversale de la figure 1. Cette génératrice comprend un rotor ayant deux flasques 8 agencés de part et d'autre de trois bobines plates 11 formant le stator et décalées de 120° l'une par rapport à l'autre relativement à l'axe du rotor, dans un même plan orthogonal à celui-ci.

Six aimants 9 sont fixés radialement et à intervalles réguliers sur chaque flasque 8, en vis-à-vis des bobines 11. La polarité de deux aimants 9 consécutifs ou en vis-à-vis est opposée. Un circuit imprimé 6 est fixé à la platine 4 et sert de support pour les bobines 11.

L'alimentation du circuit électronique 10, à faible consommation d'énergie, est assurée par une génératrice électrique - constituée de l'ensemble arbre du rotor 5, flasques 8, aimants 9 et bobines 11 - entraînée via la liaison cinématique 3 par le dispositif à barillet 2. L'énergie mécanique stockée dans le barillet 2 entraîne donc le rotor. Le passage des aimants 9 à proximité des bobines 11 génère une tension induite substantiellement sinusoïdale aux bornes de ces bobines 11.

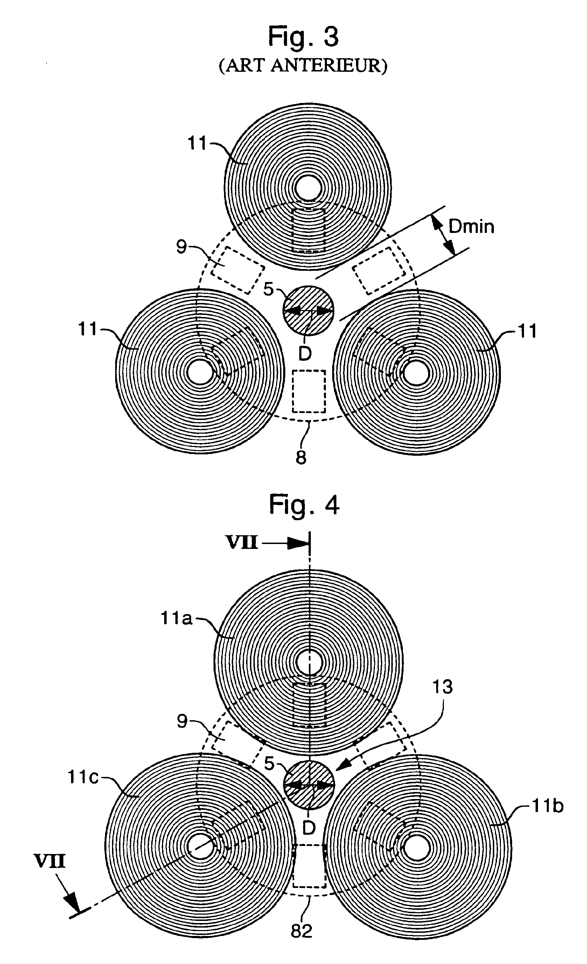

La figure 3 ci-jointe met schématiquement en évidence le fait que le montage du rotor monobloc - constitué des pièces 5, 8 et 9 dans le dispositif complet se fait actuellement par insertion latérale de l'arbre 5 entre deux bobines 11 fixes. Le rotor, monobloc, ne peut pas être inséré par la verticale puisque les trois bobines 11 sont fixes et les flasques 8 situés de part et d'autre de ces bobines doivent partiellement les recouvrir. Comme cela ressort en particulier des figures 2 et 3 du document cité, les bobines 11 présentent un écartement, référencé DMin à la figure 3 ci-jointe, au moins aussi large que l'arbre 5 du rotor, ayant un diamètre D en son milieu, pour permettre l'introduction de cet arbre latéralement jusqu'à son emplacement définitif au centre des trois bobines. Du fait de l'espacement alors ménagé entre les trois bobines 11 décalées angulairement de 120°, on obtient un médiocre recouvrement de ces bobines 11 par les aimants 9, ce qui entraîne une baisse du rendement de la microgénératrice, et un encombrement relativement important. En d'autres termes le nombre de spires des bobines 11 superposées aux flasques 8 portant en périphérie les aimants 9 est limité.

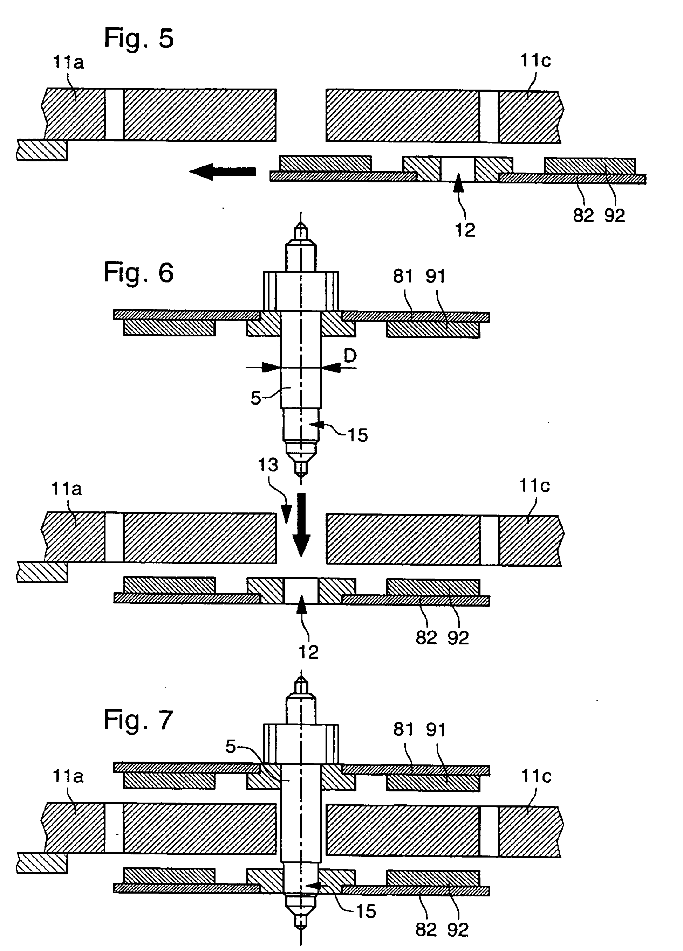

Le document de brevet EP 0 751 445 décrit schématiquement une génératrice du type susmentionné. Le rotor est constitué de deux flasques portant aimants et d'un arbre cylindrique central. La figure 7 semble indiquer que l'écartement entre deux bobines est inférieur au diamètre de l'arbre. Toutefois le texte n'en dit rien de sorte qu'aucun enseignement ne peut être déduit à cet égard de cette figure 7. La figure 2 de ce document présente le rotor comme un monobloc. Par contre les bobines sont représentées dans les figures sans support commun de sorte que le montage de la génératrice est a priori effectué en apportant séparément les bobines entre les deux flasques du rotor. Un tel montage n'est pas aisé et complexe. De plus il est difficile d'assurer un positionnement relatif correct des bobines. Un enseignement similaire ressort du document de brevet DE 18 11 389 U.

L'invention vise à remédier à ces inconvénients. Elle se rapporte à cet effet à une génératrice du type horloger telle que définie à la revendication 1 ou à la revendication 2 annexées à la présente description de l'invention. L'invention concerne également un procédé de montage d'une génératrice du type horloger, tel que défini à la revendication 6.

L'espace séparant deux bobines adjacentes peut être ainsi diminué et même supprimé pour certaines dimensions des bobines sans nécessiter un montage latéral au moins partiellement individuel des bobines avec le rotor.

L'invention sera bien comprise par la description suivante faite en référence au dessin schématique annexé dans lequel :
- la figure 4 est une coupe, similaire à la figure 3, d'un premier mode de réalisation de la génératrice selon l'invention suivant un plan parallèle aux flasques du rotor;
- les figures 5, 6 et 7 sont des coupes selon la ligne en traits interrompus de la figure 4 et détaillent les étapes d'assemblage de la génératrice de cette figure 4;
- la figure 8 est une coupe, similaire à la figure 2, d'un deuxième mode de réalisation de la génératrice selon l'invention.

En se référant à l'ensemble des figures 4 à 7, et en particulier à la figure 6, on peut observer que l'arbre de rotor 5 est fixé solidement au flasque supérieur 81. Le flasque inférieur 82 comporte un alésage 12 en son centre. L'arbre 5 du rotor est introduit dans cet alésage 12 après avoir été introduit librement dans l'espace central 13 délimité par trois bobines 11a, 11b, 11c. Les aimants 91 et 92 sont identiques à ceux précédemment désignés en Figure 2 par la référence 9. Ainsi le rotor est monté axialement et non radialement comme dans l'art antérieur.

Selon une variante particulière de réalisation, les flasques 81 et 82 sont maintenus assemblés en regard l'un de l'autre grâce à l'attraction magnétique réciproque et suffisante qu'exercent les aimants 91 sur les aimants 92 de polarités opposées. Dans ce cas-ci, le flasque 82 n'est pas fixé rigidement à l'arbre 5 de sorte que le montage et le démontage du rotor se fait aisément.

En se référant à la figure 4, on s'aperçoit que l'espace central 13 ménagé au centre des trois bobines cylindriques 11 a, 11b et 11 c est suffisant pour introduire l'arbre du rotor 5 verticalement, c'est à dire coaxialement aux axes des bobines et du rotor, alors que la distance séparant deux bobines adjacentes est inférieure au diamètre D de cet arbre 5 en son milieu.

Le rotor selon l'invention se présente en deux parties avant l'assemblage de la génératrice. Il est ensuite monté axialement de manière à ce que ces deux parties soient solidaires en rotation, soit par un couplage mécanique, soit par un couplage magnétique. La première partie est ici constituée du flasque supérieur 81 équipé de ses aimants 91 et fixé mécaniquement à l'arbre 5 avant montage. La deuxième partie est constituée du flasque inférieur 82 et de ses aimants 92. L'agencement selon l'invention permet ainsi de réduire la distance séparant les bobines 11 et donc d'augmenter le recouvrement de ces bobines 11 par les aimants 91 et 92. Cette modification se traduit par une augmentation du rendement de la génératrice ou par un plus faible encombrement de celle-ci pour un rendement donné.

La figure 5 représente la première phase de montage. Les bobines 11, au nombre de trois, sont déjà fixées sur leur support. Dans une variante, un espace ménagé sous les bobines 11 permet de glisser latéralement le flasque inférieur 82 dans son emplacement. Dans une autre variante, le flasque inférieur peut être placé dans un logement avant l'apport des bobines ou simultanément à celles-ci.

La figure 6 montre la phase d'assemblage suivante, où l'arbre 5 portant le flasque 81 est présenté verticalement dans l'espace central 13 ménagé entre les trois bobines, avant d'être inséré finalement dans l'alésage 12 du flasque 82.

La figure 7 représente le rotor assemblé. Selon une variante préférée, la liaison entre les pièces 5 et 82 est maintenue grâce à la force magnétique qu'exercent entre eux les aimants 91 et 92 de même que le positionnement angulaire relatif des deux flasques 81 et 82.

Dans une autre variante de réalisation, il est prévu que le trou 12 dans la partie centrale du flasque 82 et la partie 15 de l'arbre 5 insérée dans ce trou présentent des profils complémentaires non circulaires. Ainsi, les flasques 81 et 82 sont mécaniquement solidaires en rotation, sans nécessiter de chasser ou coller l'arbre 5 au flasque 82. Cependant ces dernières variantes peuvent aussi être envisagées.

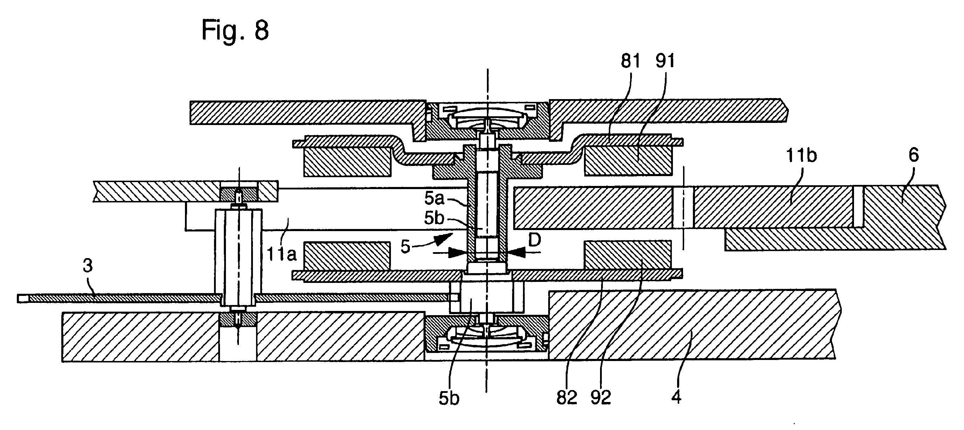

Dans un deuxième mode de réalisation représenté en coupe à la figure 8, il est prévu que l'arbre 5 soit en deux parties 5a et 5b auxquelles sont respectivement fixées les deux flasques 81 et 82.

La partie 5a comprend un tube s'étendant sensiblement entre les deux flasques 81 et 82. Une extrémité du tube s'appuie sur une portée de la partie 5b. Cette partie 5b comprend un axe introduit dans le tube de la partie 5a. Cet axe présente deux saillies servant de surfaces de contact avec la surface interne du tube.

Un ajustement à frottement glissant est prévu entre l'axe et le tube. Les deux saillies permettent de limiter le frottement de sorte que les forces magnétiques sont suffisantes pour permettre un autopositionnement angulaire relatif des flasques 81 et 82. L'assemblage se fait de manière similaire à celui représenté à l'aide des figures 5 à 7. Ce mode de réalisation est avantageux relativement au premier mode décrit ci-avant par le fait que les parties 5a et 5b peuvent être alignées précisément. Le tube prévu permet un guidage précis de l'axe étant donné que tous deux se prolongent dans la région centrale définie par les bobines.

On notera que dans les modes de réalisation et variantes susmentionnées, les bobines peuvent être assemblées au mouvement horloger avant l'assemblage du rotor ou ultérieurement à cet assemblage. Dans ce dernier cas qui peut s'avérer avantageux pour le montage du mouvement horloger, la génératrice est donc agencée dans le mouvement horloger après que le rotor soit assemblé de la manière décrite ci-avant, notamment à l'aide d'un posage prévu à cet effet.

Dans une variante de réalisation dans laquelle la génératrice est assemblée avant son montage dans le mouvement horloger, la partie 15 de l'arbre 5 peut être plus aisément chassée dans la partie centrale du flasque 82. Comme alternative, on peut aussi envisager un soudage ou collage. Lors de l'apport de la génératrice dans le mouvement horloger, les aimants supérieurs du rotor s'appuient sur les bobines 11 fixées sur un support. Ce support peut former un circuit imprimé sur lequel les extrémités des bobines sont soudées.

## Revendications

1. Génératrice du type horloger comprenant d'une part un rotor comportant deux flasques (81, 82) portés par un arbre (5) présentant un diamètre D en son milieu, des aimants (91, 92) étant fixés à chaque flasque en nombre pair - deux aimants consécutifs ou en vis-à-vis étant de polarité opposée - cette génératrice comprenant d'autre part un stator formé d'au moins trois bobines (11) d'axes parallèles à celui dudit rotor et fixées sur un support, ces bobines étant agencées entre les deux flasques (81, 82) munis d'aimants (91, 92) et définissant entre elles un espace central (13) suffisant pour l'arbre (5) du rotor, la distance séparant deux bobines adjacentes quelconques étant inférieure audit diamètre D dudit arbre, **caractérisée en ce que** ledit rotor est constitué d'au moins deux parties distinctes comportant chacune un des deux flasques, et comprenant respectivement un tube (5a) et un axe (5b) formant ensemble au moins partiellement ledit arbre, ledit axe étant agencé pour être introduit dans ledit tube avec un frottement glissant.

2. Génératrice du type horloger comprenant d'une part un rotor comportant deux flasques (81, 82) portés par un arbre (5) présentant un diamètre D en son milieu, des aimants (91, 92) étant fixés à chaque flasque en nombre pair- deux aimants consécutifs ou en vis-à-vis étant de polarité opposée - cette génératrice comprenant d'autre part un stator formé d'au moins trois bobines (11) d'axes parallèles à celui dudit rotor et fixées sur un support, ces bobines étant agencées entre les deux flasques (81, 82) munis d'aimants (91, 92) et définissant entre elles un espace central (13) suffisant pour l'arbre (5) du rotor, la distance séparant deux bobines adjacentes quelconques étant inférieure audit diamètre D dudit arbre, **caractérisée en ce que** ledit rotor est constitué de deux parties distinctes, la première partie comprenant un (82) des deux flasques qui présente dans sa partie centrale un alésage (12) et la seconde partie comprenant l'autre de ces deux flasques fixé audit arbre, une partie (15) de cet arbre étant agencé pour être insérée dans ledit alésage et présentant un profil non circulaire complémentaire au profil de cet alésage.

3. Génératrice selon la revendication 1 ou 2, **caractérisée en ce que** les deux parties distinctes dudit rotor sont maintenues assemblées par l'attraction magnétique réciproque exercée par les aimants d'un flasque (81 ou 82) sur les aimants de l'autre flasque.

4. Montre dont le mouvement est équipé d'une génératrice selon l'une des revendications 1 à 3.

5. Montre selon la revendication 4, **caractérisée en ce que** ledit support portant les bobines est fixé audit mouvement, les deux parties distinctes dudit rotor étant prévues démontables.

6. Procédé de montage d'une génératrice du type horloger comprenant un rotor, formé de deux flasques (81, 82) portant des aimants (91, 92) et d'un arbre central (5), et un stator formé d'au moins trois bobines (11), comprenant les étapes suivantes:
- Fixation desdites bobines sur un support de manière à définir entre elles un espace central, deux bobines adjacentes ayant un écartement inférieur au diamètre dudit arbre du rotor;
- Ledit rotor, formé initialement de deux parties distinctes comprenant respectivement les deux flasques, est apporté de manière que ses deux parties distinctes soient situées respectivement de part et d'autre desdites bobines;
- Ledit arbre est introduit axialement dans ledit espace central pour assembler ledit rotor, les deux parties distinctes de ce rotor étant alors assemblées l'une avec l'autre.

7. Procédé selon la revendication 6, **caractérisé en ce que** ledit arbre est initialement fixé à l'un des deux flasques et forme avec ce dernier l'une des deux parties distinctes.

8. Procédé selon la revendication 6, **caractérisé en ce que** ledit arbre est formé d'un tube (5a) et d'un axe (5b) associés respectivement aux deux parties distinctes avant l'assemblage dudit rotor, ledit axe étant introduit dans ledit tube avec un frottement glissant lors de l'étape d'assemblage dudit rotor.

9. Procédé selon l'une des revendications 6 à 8, **caractérisé en ce que** l'assemblage dudit rotor est effectué une fois les bobines fixées à un mouvement horloger dans lequel la génératrice est agencée.

## Claims

1. Generator of the timepiece type, including, on the one hand, a rotor including two flanges (81, 82), carried by a shaft (5) that has a diameter D at the centre thereof, magnets (91, 92), being secured to each flange in even numbers - two consecutive or facing magnets having opposite polarity - said generator including, on the other hand, a stator, formed of at least three coils (11), whose axes are parallel to that of said rotor and which are fixed onto a support, said coils being arranged between the two flanges (81, 82) provided with magnets (91, 92) and defining between them a central space (13) that is sufficient for the rotor shaft (5), the distance separating any two adjacent coils being smaller than said diameter D of said shaft, **characterized in that** said rotor is formed of at least two distinct parts, each including one of the two flanges, and respectively including a tube (5a) and a pin (5b), which together at least partially form said shaft, said pin being arranged to be inserted in said tube with a friction slide fit.

2. Generator of the timepiece type, including, on the one hand, a rotor including two flanges (81, 82), carried by a shaft (5) that has a diameter D at the centre thereof, magnets (91, 92), being secured to each flange in even numbers - two consecutive or facing magnets having opposite polarity - said generator including, on the other hand, a stator, formed of at least three coils (11), whose axes are parallel to that of said rotor and which are fixed onto a support, said coils being arranged between the two flanges (81, 82) provided with magnets (91, 92) and defining between them a central space (13) that is sufficient for the rotor shaft (5), the distance separating any two adjacent coils being smaller than said diameter D of said shaft, **characterized in that** said rotor is formed of two distinct parts, the first part including one (82) of the two flanges, which has a bore (12) in the central part thereof, and the second part including the other of the two flanges, secured to said shaft, one part (15) of said shaft being arranged to be inserted in said bore and having a non-circular profile complementary to the profile of said bore.

3. Generator according to claim 1 or 2, **characterized in that** the two distinct parts of said rotor are held assembled to each other by the mutual magnetic attraction exerted by the magnets of one flange (81 or 82) on the magnets of the other flange.

4. Watch whose movement is fitted with a generator according to any of claims 1 to 3.

5. Watch according to claim 4, **characterized in that** said support that carries the coils is secured to said movement, the two distinct parts of said rotor being able to be disassembled from each other.

6. Method of assembling a generator of the timepiece type including a rotor, formed of two flanges (81, 82), carrying magnets (91, 92), and a central shaft (5), and a stator formed of at least three coils (11), including the following steps:
- securing said coils to a support so as to define between said coils a central space, two adjacent coils being separated by a smaller distance than the diameter of said rotor shaft,
- said rotor, initially formed of two distinct parts respectively including the two flanges, is placed such that the two distinct parts thereof are located respectively on either side of said coils;
- said shaft is inserted axially into said central space to assembly said rotor, the two distinct parts of said rotor then being assembled to each other.

7. Method according to claim 6, **characterized in that** said shaft is initially secured to one of said two flanges and forms therewith one of the two distinct parts.

8. Method according to claim 6, **characterized in that** said shaft is formed of a tube (5a) and a pin (5b) respectively associated with two distinct parts prior to assembly of said rotor, said pin being inserted in said tube with a slide friction fit during the step of assembly said rotor.

9. Method according to any of claims 6 to 8, **characterized in that** the assembly of said rotor is performed once the coils have been secured to a timepiece movement in which the generator is arranged.

## Patentansprüche

1. Generator für Zeitmessgerät, der einerseits einen Rotor mit zwei Flanschen (81, 82) umfasst, die von einer Welle (5) getragen werden, die in ihrer Mitte einen Durchmesser D aufweist, wobei an jedem Flansch in einer geraden Anzahl Magnete (91, 92) befestigt sind - wobei zwei aufeinander folgende oder gegenüber liegende Magnete entgegengesetzte Polarität haben - wobei dieser Generator andererseits einen Stator umfasst, der aus wenigstens drei Wicklungen (11) mit Achsen, die zu jener des Rotors parallel sind und an einem Träger befestigt sind, gebildet ist, wobei diese Wicklungen zwischen den zwei mit Magneten (91, 92) versehenen Flanschen (81, 82) angeordnet sind und zwischen sich einen mittigen Zwischenraum (13) definieren, der für die Welle (5) des Rotors ausreicht, wobei der Abstand, der zwei beliebige benachbarte Wicklungen trennt, kleiner als der Durchmesser D der Welle ist, **dadurch gekennzeichnet, dass** der Rotor aus wenigstens zwei verschiedenen Teilen gebildet ist, die jeweils einen der zwei Flansche tragen und ein Rohr (5a) bzw. eine Achse (5b) enthalten, die gemeinsam wenigstens zum Teil die Welle bilden, wobei die Achse dazu ausgelegt ist, in das Rohr mit Gleitreibung eingeführt zu werden.

2. Generator für Zeitmessgerät, der einerseits einen Rotor mit zwei Flanschen (81, 82) umfasst, die von einer Welle (5) getragen werden, die in ihrer Mitte einen Durchmesser D aufweist, wobei an jedem Flansch in einer geraden Anzahl Magnete (91, 92) befestigt sind - wobei zwei aufeinander folgende oder gegenüber liegende Magnete entgegengesetzte Polarität haben - wobei dieser Generator andererseits einen Stator umfasst, der aus wenigstens drei Wicklungen (11) mit Achsen, die zu jener des Rotors parallel sind und an einem Träger befestigt sind, gebildet ist, wobei diese Wicklungen zwischen den zwei mit Magneten (91, 92) versehenen Flanschen (81, 82) angeordnet sind und zwischen sich einen mittigen Zwischenraum (13) definieren, der für die Welle (5) des Rotors ausreicht, wobei der Abstand, der zwei beliebige benachbarte Wicklungen trennt, kleiner als der Durchmesser D der Welle ist, **dadurch gekennzeichnet, dass** der Rotor aus zwei verschiedenen Teilen gebildet ist, wobei der erste Teil einen (82) dieser zwei Flansche aufweist, der in seinem Mittelteil eine Bohrung (12) aufweist, und der zweite Teil den anderen dieser zwei Flansche aufweist, der an der Welle befestigt ist, wobei ein Teil (15) dieser Welle dazu ausgelegt ist, in die Bohrung eingesetzt zu werden, und ein nicht kreisförmiges Profil aufweist, das zu dem Profil dieser Bohrung komplementär ist.

3. Generator nach Anspruch 1 oder 2, **dadurch gekennzeichnet, dass** die zwei verschiedenen Teile des Rotors durch gegenseitige magnetische Anziehung, die von den Magneten eines Flansches (81 oder 82) auf den Magneten des anderen Flansches ausgeübt wird, zusammengehalten werden.

4. Uhr, deren Werk einen nach einem der Ansprüche 1 bis 3 gebildeten Generator umfasst.

5. Uhr nach Anspruch 4, **dadurch gekennzeichnet, dass** der Träger, der die Wicklungen trägt, an dem Werk befestigt ist, wobei die zwei verschiedenen Teile des Rotors abnehmbar vorgesehen sind.

6. Verfahren zum Montieren eines Generators für Zeitmessgeräte, der einen Rotor, der aus zwei Flanschen (81, 82), die Magneten (91, 92) tragen, und aus einer mittigen Welle (5) gebildet ist, und einen Stator, der aus wenigstens drei Wicklungen (11) gebildet ist, umfasst, wobei das Verfahren die folgenden Schritte umfasst:
- Befestigen der Wicklungen an einem Träger, derart, dass zwischen ihnen ein mittiger Zwischenraum definiert wird, wobei zwei benachbarte Wicklungen einen Abstand haben, der kleiner als der Durchmesser der Welle des Rotors ist;
- Anbringen des Rotors, der zunächst aus zwei verschiedenen Teilen gebildet wird, die die zwei Flansche enthalten, derart, dass sich seine zwei verschiedenen Teile beiderseits dieser Wicklungen befinden;
- axiales Einführen der Welle in den mittigen Zwischenraum, um den Rotor zusammenzufügen, wobei die zwei verschiedenen Teile dieses Rotors dann miteinander zusammengefügt werden.

7. Verfahren nach Anspruch 6, **dadurch gekennzeichnet, dass** die Welle zunächst an einem der zwei Flansche befestigt wird und mit diesem Letzteren einen der zwei verschiedenen Teile bildet.

8. Verfahren nach Anspruch 6, **dadurch gekennzeichnet, dass** die Welle aus einem Rohr (5a) und einer Achse (5b) gebildet ist, die vor der Zusammenfügung des Rotors den zwei verschiedenen Teilen zugeordnet sind, wobei im Schritt des Zusammenfügens des Rotors die Achse in das Rohr mit Gleitreibung eingeführt wird.

9. Verfahren nach einem der Ansprüche 6 bis 8, **dadurch gekennzeichnet, dass** die Zusammenfügung des Rotors erfolgt, sobald die Wicklungen an einem Uhrwerk befestigt sind, in dem der Generator angeordnet ist.
